# DEMANDE DE BREVET EUROPEEN

(11) **EP 0 645 115 A1**
(43) Date de publication de la demande: **29.03.1995**
(21) Numéro de dépôt: 94420259.7
(22) Date de dépôt: 27.09.1994
(51) Int. Cl.: A47J 47/00

(54) **Planche pour la découpe de produits de charcuterie**

(30) Priorité: 27.09.1993 FR 9311694
(71) Demandeur: AOSTE, F-38490 Aoste (FR); CARREFOUR FRANCE, F-91000 Evry (FR)
(72) Inventeur: Bouillin, Hervé, F-69003 Lyon (FR)
(74) Mandataire: Guerre, Dominique

(57) **Abrégé**

Cette planche est du type constitué par un plateau (3) rectangulaire ou carré.

Elle présente, le long de l'un de ses bords, à savoir, son bord antérieur (3a), un retour vertical antérieur (4) dirigé vers le bas et apte à prendre appui contre le bord antérieur (5a) d'un plan ou d'une table de travail (5) et, le long de son bord opposé, c'est-à-dire le long de son bord postérieur (3b), un retour vertical postérieur (6) dirigé vers le haut et apte à constituer une butée d'appui pour le produit à découper.

## Description

La présente invention concerne une planche pour la découpe de produits de charcuterie ou salaison et, plus particulièrement, quoique non exclusivement, pour le découennage du jambon.

On sait qu'un jambon est mis à sécher pendant une durée de sept à douze mois avant sa commercialisation.

Le plus souvent, le jambon est recouvert par la couenne qui est le cuir de porc séché. La face du jambon correspondant à la face intérieure de la cuisse, qui a été coupée, est recouverte de panes constituées par un mélange d'épices broyés avec de la graisse de porc.

En fin de séchage, le jambon est désossé, recousu et conformé de façon régulière dans un moule, sous une pression de l'ordre de quinze tonnes, pendant quelques secondes.

En conséquence, les jambons réalisés avec couenne par un salaisonnier présentent sensiblement la même forme et les mêmes dimensions.

Avant de commercialiser un jambon en tranches, le charcutier doit procéder à son découennage, c'est-à-dire au retrait de sa couenne. Cette opération est exécutée à l'aide d'un couteau, par passage de sa lame entre la couenne et la viande du jambon, c'est-à-dire au niveau d'une couche de gras, ce qui facilite leur séparation.

Cependant, cette opération est délicate car le jambon est un produit gras, qui n'est tenu que d'une seule main par l'opérateur et qui tend à glisser sur le plan de travail sur lequel cet opérateur le met en appui. Il en résulte, notamment, des risques de blessures. C'est aussi une opération difficile à réaliser par un non professionnel de la salaison, tel qu'une vendeuse sur le rayon de charcuterie d'une grande surface.

Conformément au document US-C-5100115, on a décrit une planche pour la découpe de charcuterie, comprenant un plateau et des moyens de retenue dudit plateau par rapport au plan de travail sur lequel il est posé, aptes à s'opposer à toute poussée dans le sens antérieur-postérieur, sous l'effet de la découpe dudit produit par l'utilisateur. Un retour vertical postérieur est prévu sur le plateau, pour former butée d'appui pour le produit à découper ; il possède une découpe pour le passage de la lame d'un couteau.

La présente invention vise à améliorer la tenue du produit à découper contre le retour vertical postérieur, tout en permettant le passage de la lame de couteau, quelle que soit son orientation par rapport au plan de travail.

Selon la présente invention, la face antérieure du retour vertical postérieur comporte un évidement servant d'appui au produit à découper, et composé d'une partie centrale ayant un profil plan, sensiblement parallèle au bord postérieur du plateau et présentant la découpe, et de deux parties latérales arrondies, disposées symétriquement par rapport à la découpe.

Les moyens de retenue du plateau consistent en :
- un retour vertical antérieur dirigé le long du bord antérieur du plateau, et apte à prendre appui contre le bord antérieur d'un plan ou d'une table de travail ;
- et/ou des ventouses disposées sur la face antérieure du plateau.

Lorsqu'une planche selon l'invention comprend les deux moyens de retenue définis précédemment, le retour vertical antérieur est monté de manière amovible sur le bord antérieur de la table de travail.

Par exemple, lorsque cette planche est destinée au découennage d'un jambon, le rayon de courbure de chaque partie latérale arrondie correspond sensiblement à celui de chacune des extrémités latérales de l'entame du jambon.

Préférentiellement, la partie centrale de l'évidement présente une découpe dont le niveau inférieur affleure avec la face supérieure du plateau. Cette découpe permet le passage de la lame du couteau, en fin de découpe.

Suivant encore une autre caractéristique avantageuse de l'invention, visant à améliorer encore la tenue du produit à découper, notamment lorsque cette dernière est destinée au découennage d'un jambon, la hauteur de son retour postérieur doit être suffisante pour retenir le jambon, mais limitée pour ne pas constituer une gêne pour le découennage, au niveau de l'entame qui est en appui contre ce retour.

Par exemple, la hauteur de ce retour vertical postérieur est sensiblement égale à la moitié de l'épaisseur d'un jambon à découenner, au niveau de son entame.

De toute façon, l'invention sera bien comprise, à l'aide de la description qui suit, en référence au dessin schématique annexé représentant, à titre d'exemple non limitatif, une forme d'exécution de cette planche à découpe :
Figure 1 en est une vue en perspective, en position d'utilisation sur un plan de travail ;
Figure 2 est une vue de côté.
Figure 3 est une vue en plan par dessus, de la planche à découper de figure 1, illustrant son mode d'utilisation lors du découennage d'un jambon ;
Figure 4 est une vue arrière, légèrement en perspective, illustrant le mode d'utilisation de cette planche à découper lors du découennage de l'entame d'un jambon.

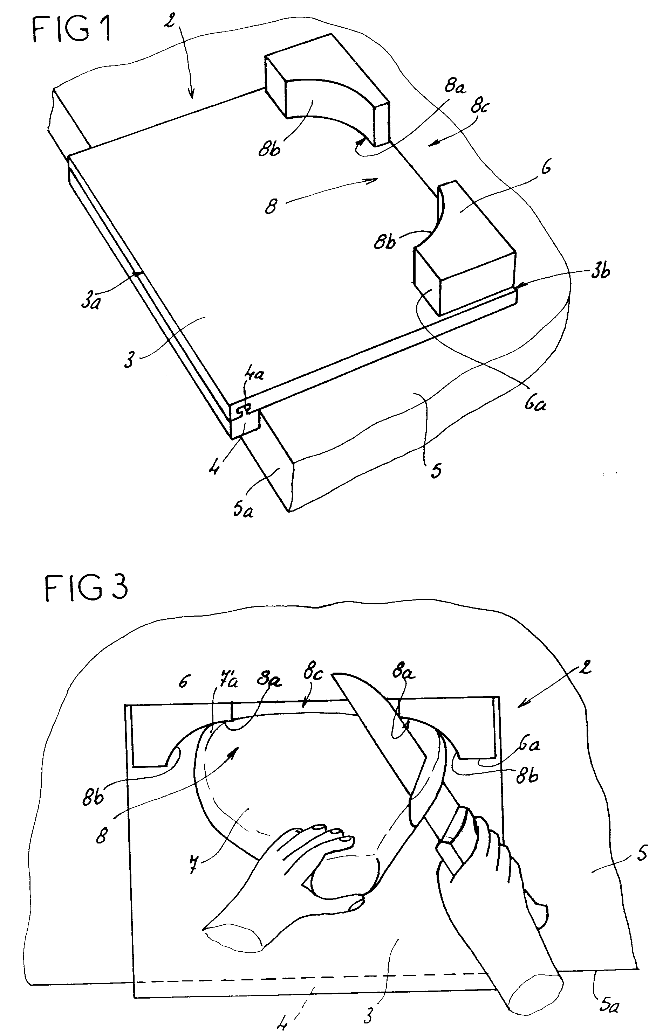

Comme le montre la figure 1, la planche à découper 2 selon l'invention est constituée par un plateau rectangulaire 3 de préférence, en une matière rigide mais douce, ne risquant pas d'abîmer le fil des couteaux à découper. Une matière convenant particulièrement bien à cette application est le nylon.

Comme le montre le dessin, le plateau 3 présente, le long de son bord antérieur 3a, un retour vertical 4 dirigé vers le bas. Ce retour vertical 4 est destiné à prendre appui contre la face antérieure 5a d'un plan de travail 5 sur lequel est placée la planche à découper 2. L'application du retour antérieur 4 contre le bord antérieur 5a du plan de travail 5 s'oppose à tout glissement de la planche à découper 2 sur ce plan de travail 5, dans le sens antérieur-postérieur, sous l'effet de la découpe du produit par l'utilisateur.

Le retour vertical 4 est monté de manière amovible sur la planche 3, par l'intermédiaire d'un tenon 4a en forme de "T" s'ajustant dans une mortaise dans le bord antérieur de la planche 3.

Le plateau 3 présente également sur sa face inférieure des ventouses 10, susceptibles d'adhérer sur le plan de travail, et aptes à s'opposer à toute poussée dans le sens antérieur-postérieur du plateau, sous l'effet de la découpe du produit par l'utilisateur, et lorsque le retour vertical antérieur 4 n'est pas en place.

Le long de son bord opposé à son bord antérieur 3a, c'est-à-dire le long de son bord postérieur 3b, le plateau 3 présente un retour vertical 6 dirigé vers le haut. Ce retour vertical postérieur 6 est destiné à servir d'appui au produit à découper sur cette planche 2.

Pour limiter les risques de glissement du produit à découper contre le retour vertical postérieur 6 qui lui sert d'appui, la face antérieure 6a de ce retour 6 présente un évidement central 8.

Dans l'exemple illustré sur le dessin, la planche à découper 2 est plus particulièrement destinée au découennage d'un jambon 7. Dans ce cas, l'évidement 8 présente le profil illustré sur le dessin, c'est-à-dire qu'il comporte une partie centrale 8a, de profil plan sensiblement parallèle au bord postérieur 3b du plateau 3, présentant la découpe 8c, et encadrée de deux parties latérales arrondies 8b, disposées symétriquement par rapport à la découpe 8c. Comme le montre le dessin, chaque partie arrondie 8b présente un rayon sensiblement égal au rayon des extrémités arrondies 7'a de l'entame 7a d'un jambon 7.

La découpe 8c a un niveau inférieur affleurant avec la face supérieure du plateau 3, pour le passage de la lame du couteau.

Comme le montre plus particulièrement la figure 2, pour que le retour 6 ne constitue pas un obstacle au découennage d'un jambon 7, au niveau de son entame 7a, de préférence, la hauteur du retour vertical postérieur 6 est sensiblement égale à la moitié de l'épaisseur d'un jambon 7, au niveau de son entame 7a.

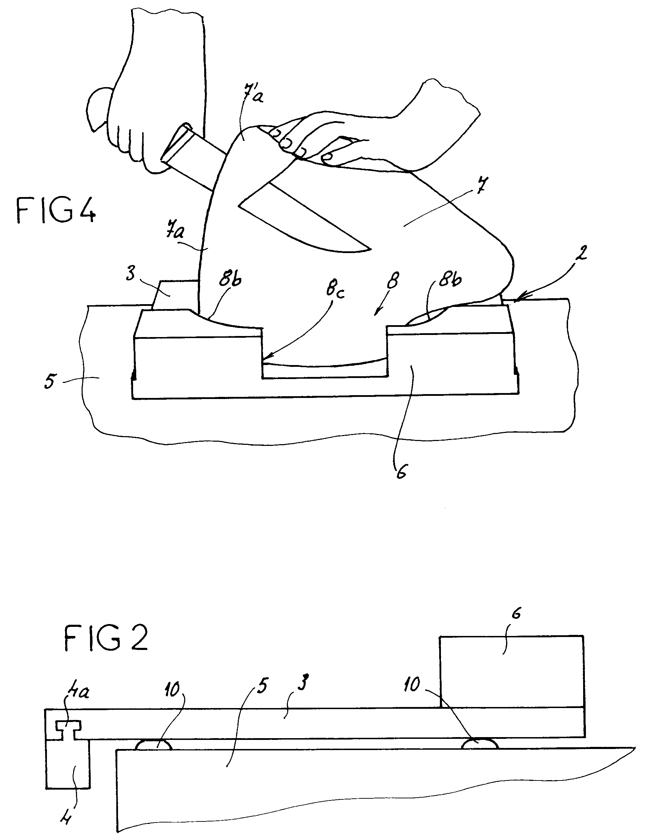

Comme le montrent plus particulièrement les figures 3 et 4, la planche 2 selon l'invention facilite considérablement le travail d'un opérateur chargé, par exemple, de découenner un jambon, car la tenue de ce dernier sur la planche 2, ainsi que la tenue de la planche à découper 2 sur le plan de travail 5 sont considérablement améliorées par rapport à ce qui était obtenu avec les planches à découper antérieurement connues.

## Revendications

1. Planche pour la découpe de produits de charcuterie, comprenant un plateau (3), des moyens (4,10) de retenue dudit plateau par rapport au plan de travail sur lequel il est posé, aptes à s'opposer à toute poussée dans le sens antérieur-postérieur, sous l'effet de la découpe dudit produit par l'utilisateur, et un retour vertical postérieur (6) formant butée d'appui pour le produit à découper, ce retour possédant une découpe (8c), pour le passage de la lame d'un couteau, **caractérisée en** **ce que** la face antérieure (6a) du retour vertical postérieur (6) comporte un évidement (8) servant d'appui au produit à découper et composé d'une partie centrale (8a) ayant un profil plan, sensiblement parallèle au bord postérieur (3b) du plateau (3) et présentant la découpe (8c), et de deux parties latérales arrondies (8b), disposées symétriquement par rapport à la découpe (8c).

2. Planche selon la revendication 1, **caractérisée** **en ce que** lorsqu'elle est destinée au découennage d'un jambon (7), le rayon de courbure de chaque partie latérale arrondie (8b) correspond sensiblement à celui de chacune des extrémités latérales (7'a) de l'entame (7a) du jambon (7).

3. Planche selon l'une quelconque des revendications 1 et 2, **caractérisée en ce que** la hauteur de son retour postérieur (6) est suffisante pour retenir le jambon (7) mais insuffisante pour constituer une gêne pour le découennage, au niveau de l'entame (7a) du jambon (7) qui est en appui contre ce retour postérieur (6).

4. Planche selon la revendications 3, **caractérisée en ce que** la hauteur du retour vertical postérieur (6) est sensiblement égale à la moitié de l'épaisseur d'un jambon (7) à découenner, au niveau de son entame (7a).

5. Planche selon l'une quelconque des revendications 1 à 4, **caractérisée en ce que** les moyens de retenue du plateau sont constitués par un retour vertical antérieur (4) qui est monté de manière amovible sur le plateau (3), notamment par engagement d'un tenon en "T" (4a) dans une mortaise ménagée dans le bord antérieur (3a) de ce plateau.
